# EUROPEAN PATENT APPLICATION

(11) **EP 1 524 613 A1**
(43) Date of publication of application: **20.04.2005**
(21) Application number: 03023305.0
(22) Date of filing: 15.10.2003
(51) Int. Cl.: G06F 17/50

(54) **Optimising method for vibration damping**

(71) Applicant: Rieter Technologies A.G., 8406 Winterthur (CH)
(72) Inventor: Caprioli, Davide, 8400 Wintherthur (CH)
(74) Representative: Felber, Josef

(57) **Abstract**

The present invention is directed to an optimising method for vibration damping treatments of vehicle body panels. The essence of present invention is to be seen in that this new optimisation tool is based on a genetic algorithm and is able to efficiently predict the optimum damping package on vehicle body panels in terms of materials, thickness and local damping distribution without the use of any experimental metholdolgy for determining the vibration response. The present invention allows the efficient exploration of very large solution domains and has the possibility of taking into account high numbers of variables, even in full vehicle computations (metal sheet and damping treatment type, thickness, temperature and distribution). The optimisation method acccordng to the present invention has an open architecture, which makes it easy to modify and link to any simulation methodology.

## Description

The present invention relates to a optimising method for vibration damping treatments of vehide body panels according to the preamble of daim 1.

The current trend in the automotive industry towards reductions of treatment weight and cost, along with increasing demands for shorter development time and improved vehicle Noise and Vibration Harshness (NVH) characteristics, dictates the necessity for design methodologies which allow efficient optimisation of vehide body treatments. These methodologies are essential to shorten development time and achieve high performance treatment configurations. They can be embedded into vehide Computer Aided Engineering (CAE) design flow and can then be used in providing design and platform component sharing guidance information before prototype vehides are available.

There are many methods known to the man skilled in the art to optimise damping treatments for vehicles. Nevertheless all these methods are based on standard Design of Experiment Techniques and are commonly gradient-based methods. None of them can efficiently and reliably handle a higher number of optimisation variables.

From EP 1 177 950 it is known how to optimise the vibration damping. This method uses a vibration damping material which is applied only in areas of maximum vibrational response after having determined maximum points of vibration response. The vibrational response of each section of the vehide components is scanned after exciting some vehide component from one point. The disadvantage of this method is to be seen in the use of an experimental methodology for determining the vibration response. With the known method the damping material has to be applied on the areas with maximum vibrations, while the present invention looks to areas where the reduction of vibration shows a maximum overall effect, which is different than looking at the magnitude of the original vibrations.

It is the aim of present invention to achieve a stable method for automatic optimisation of vibration damping treatments for vehides, which can efficiently and reliable handle a large number of variables.

This is achieved by a method comprising the features of daim 1, and in particular by an optimisation tool named Genetic Optimisation for Lightweight Damping (GOLD). The foundations of this tool are based upon Genetic Algorithms. The user can take into account many different damping material types and damping material thicknesses, distributed on metallic body panels of different thicknesses as well as different temperature areas the damping package. The damping package optimisation process is automatically performed and controlled by the GOLD software. The user can interactively control the ongoing optimisation process and customise it by directly pre-setting special desired objectives and/or constraints, in terms of weight and NVH-performance (vibration or acoustic pressure), with simple interface commands.

Prsent invention, named GOLD, is a new tool for the automatic optimisation of vehide damping treatments. It is based upon Genetic Algorithms, which are recognised as the most powerful methodology to handle complex optimisation problems with very large numbers of possible discontinuous variables and exploits Finite Element (FE) and Boundary Element (BE) simulation techniques. The application field of this tool typically lies in the low middle frequency range. The possible variables taken into account for the damping treatment optimisation can be:
- panel material;
- panel thickness;
- damping treatment type;
- damping treatment thickness;
- panel area temperature; for instance, higher temperatures can be assigned to body panels in the tunnel or dash areas or a temperature distribution map derived from a thermal camera can be taken into account;
- damping treatment local distribution.

In practice, GOLD can take into account a very high number of optimisation variables, which in theory would lead to a huge number of possible damping treatment configurations (typically billions) and efficiently handle optimisation problems practically impossible to be solved with standard Design of Experiments (DOE) techniques and gradient-based methods. The necessary starting input data for the optimisation are the following:
- FE model of the structure (vehide body) on which damping has to be optimised;
- In case an acoustic target is required, BE (or FE) model of the passenger compartment;
- Material parameters of all the possible damping treatments used in the optimisation;
- Definition of the *damping patches,* i.e. the possible areas on the vehide body panels where damping can be applied;
- If required by the user, more additional constraints in terms of weight and NVH performance (vibration or acoustic pressure) can be defined.

In the beginning of the optimisation process, the total panel area where the designer decides damping can be applied is subdivided into a set of sub-areas, named damping patches. A damping patch is just a possible pad of damping treatment. "Possible" means that the patch can either be treated or not: GOLD can always take into account the possibility of leaving the patch bare. Each damping patch can carry a different combination of the above optimisation variables. Depending on the assembly or configuration of the damping patches, different damping packages are found. Damping treatments are included in the vehide FE model by means of the Emerald methodology, starting from measured frequency and temperature dependent material properties. However GOLD may be linked to any damping simulation methodology.

Following a typically genetic evolution flow, the optimisation is performed in a cascade of selective iterations (generations). One damping package, named *individual* and coded as a binary string, is a possible solution of the optimisation problem. Each individual (binary string) corresponds to a treatment configuration of the body panels, i.e. a specific spatial distribution of selected damping treatments on the damping patches. At each generation step, the best performing individuals according to a defined objective function (OF) are selected. The group of individuals is then able to generate new individuals by means of genetic statistical operators embedded into GOLD, like, for instance, *crossover* (exchange of some bit sequences) between the selected individuals or *mutation* (bit change for an individual). According to a statistical selection, the best performing individuals have the highest chance to reproduce, while the worst performing individuals have a low reproduction probability or may even be discarded and replaced with new ones. The initial population is randomly selected and its individuals are very different. This means global exploration of the optimisation domain takes place in order to achieve the global OF maximum; unlike gradient-based optimisation techniques, the optimisation performed by GOLD is not stopped when a local maximum is found. The vibration and acoustical response calculation of an individual is automatically run by GOLD in case a potential optimum individual is found. In the end of the optimisation process, a group (population) of best individuals is kept in memory and the optimum damping package can be selected.

The user has the possibility of monitoring the whole optimisation process on a visual user-friendly control panel where the state of the optimisation is shown in real time with its main parameters, iteration by iteration. The explored solution space (i.e. the domain containing all the possible solutions) typically has a dimension of m^{N}, where
- N is the number of possible damping patches
- m is the number of possible treatment solutions

The final optimisation target is typically the reduction of the following quantities:
- the damping package weight
- the vibration response with respect to frequency
- the acoustic response (Sound Pressure Level: SPL) with respect to frequency

The evaluation of the second quantity needs a structural FE run (i.e. Nastran®)

The evaluation of the last quantity, whose procedure is described in the following lines, needs a structural FE run plus an acoustic BE or FE computation.

In general, transfer functions from attachment points on the car body to the interior are usually given as targets for the body acoustic performance. The transfer functions are typically in terms of *p*/*F*_{*j*} where *p* is the sound pressure at the passengers' ear locations and *F*_{*j*} is the force applied at the engine or suspension attachment points, in one direction. The *p*/*F*_{*j*} transfer functions are calculated with a FE/BE uncoupled approach, which means that the fluid loading on the structure is neglected. The methodology can be divided into three main steps. In the first one, FE analysis is applied to calculate the vibration velocities *v*_{*k*} at the nodes of the structure surrounding the cavity, due to the excitation forces F_{*j*}. In the second phase, the BE analysis of the acoustic cavity is performed in i.e. Sysnoise® by placing a volumetric velocity unit source at the point where the *p*/*F*_{*j*} will be calculated. The pressure at the nodes of the BE mesh is taken as output. Thus, the p/vₖ transfer functions are calculated reciprocally. In the third phase the velocities from the first step and the *p*/*v*_{*k*} from the second step are combined to calculate the *p*/*F*_{*j*} amplitude and phase.

This technique provides some advantages in comparison to standard FE tools doing coupled vibro-acoustic calculations (like Akusmod®). A first big advantage is that the first two steps are independent. If only the structure is modified, but the geometry of the passenger's compartment stays the same, the second step does not need to be repeated and vice versa. A second remarkable advantage is that the inner absorption of the panels in the passenger compartment can be taken into account locally, rather than through modal acoustic damping. Lastly, the contribution of the vibration body panels to the sound pressure can be calculated very easily. The main approximation is that no two-directional coupling is taken into account. In addition it can be that the BE element computation is time consuming. However, it should also be considered that the BE calculation is done only once and, if required, it can be replaced with an acoustic FE calculation.

The optimisation process can be easily customised, with the possibility of choosing a set of pre-defined targets. The user can directly modify any of the above optimisation targets separately or choose any combination of them just by changing some command lines contained into a simple text interface file. It is also possible to give priority to a special target instead of another. This enables the achievement of the best compromise between weight reduction and NVH performance improvement (either structural vibration or SPL), according to the particular constraints the user wants to apply.

Two different algorithms are embedded into the GOLD optimisation toolbox:
- The *Standard Genetic Algorithm* works on a relatively large population and converges with a more regular slope to the best solution.
- The *Micro Genetic Algorithm* allows many generations on a much smaller population. It converges fast into a domain containing good solutions, then the slope of the OF curve decreases considerably.

The efficiency and versatility of GOLD makes it easy to be applied to a wide range of damping optimisation problems involving simple test cases, automotive components or vehide bodies. In the following a few typical examples are discussed:

Damping optimisation on flat rectangular plate

The very first time, the GOLD optimisation toolbox was applied to a relatively simple test case. The test structure was a free-free steel flat rectangular plate, size 800 by 500 mm and 2 mm thick. A FE model of the plate was made first. Then the Mean Square Velocity (MSV) response of the plate carrying a given reference damping treatment configuration was calculated. 14 output points were randomly spread over the plate surface, after assessing that this was enough to well characterise the MSV response of the test structure. The excitation was a unit point force applied in a comer and perpendicular to the plate surface. The reference damping treatment was a 2 mm thick layer of damping material on the whole plate surface. After that, the surface of the plate was subdivided into 16 possible rectangular damping patches, all with the same surface size.

GOLD was then used to perform a multi-objective optimisation on the plate and to find a new predicted optimised damping package giving lower MSV response levels and at least 20% lower weight than the reference damping treatment. Temperature was not considered as a variable in this case and was fixed at standard room temperature. For each patch, GOLD could choose among four different configurations: bare, 2 mm, 4 mm and 6 mm damping. The genetic algorithm optimisation by GOLD could achieve an optimum distribution of damping patches with two different thicknesses on the plate: 2 and 6 mm damping. GOLD managed to achieve significant improvements in the vibration behaviour of the plate with a contemporary 23% damping weight reduction in comparison with the initial treatment. The optimum damping package predicted by GOLD was then experimentally built up and measured. In the experimental set-up the plate was hung in order to reproduce free-free boundary conditions and was excited with white noise by a shaker in the same location and direction as the FE model, while small low-mass accelerometers were used for the output signal acquisition.

The improvement in the MSV response predicted by the optimisation for the lighter optimised damping package could be experimentally verified, i.e. by comparing the values of the FE model and experimental set-up of the plate carrying the optimised damping package, together with the simulated and measured MSV responses. It can be seen that the experiments clearly confirmed that the prediction of MSV-reduction made by GOLD was correct.

### Damping optimisation on vehicle component

This GOLD application case on a vehicle component was the next step after the first validation case on the flat plate. The component was a part of a real vehicle floor with simplified boundary conditions. Its vibration response was firstly calculated taking into account the original damping treatment. Comparative measurements of the untreated component for the same boundary and excitation conditions showed that the simulation was well able to reproduce the vibration pattems. In particular, it was important to assess that the areas with high vibration levels were the same in measurement and simulation, even though the levels did not perfectly match. GOLD was then used to perform the damping treatment optimisation on the component and find a new predicted optimised damping package giving improved vibration results, i.e. lower MSV levels, than the original reference damping treatment, keeping the same damping mass. The possible damping areas on the floor (areas which are possible candidates to apply damping treatment) were subdivided into 15 potential damping patches. For each allowed configuration of metal sheet thickness, damping type and thickness, a set of different input material properties for GOLD was created. Each patch could be left bare or carry three possible treatment configurations, which means that the total number of possible solutions of the optimisation problem was 4¹⁵ ≈ 1.1·10⁹.

In order to reach convergence of the optimisation on reasonable calculation time, the Micro Genetic Algorithm was applied first on a reduced population of five individuals. After a sufficient number of generals, when an asymptotic behaviour of the Objective Function was reached, the Micro Algorithm was stopped, after about 1 hour. The population of individuals obtained at this step was used as input to the Standard Genetic Algorithm, which was run with a population of 30 individuals and 40 generations. After the GOLD run, which in total lasted just 10 hours, the distribution and mean square velocity response of the optimised solution could be examined. The optimum distribution consists of 11 treated patches out of the 15 possible candidates. Significant improvements in the mean square velocity vibration response could be predicted. After that, the predicted optimised damping package was manufactured on the real vehicle component and an experimental verification performed. Even though in this case some discrepancies between the simulation and experimental untreated component vibration levels was found, probably due to inaccurate modelling of the structure, the experiments confirm that the predicted damping package by GOLD performs globally better than the original reference package.

The potential of GOLD for the spatial optimisation of damping treatments was also tested against a non-automated iteration of the "trial-and-error" kind. The "manual" optimisation loops, mainly based on the experience of the user, allowed to find area and thickness distributions of the treatment with a little better mean square velocity response than the initial damping package. However, after a few days of calculations, the manual optimisation could not lead to any further vibration response improvement and still the optimised response was worse than GOLD. This can give a rough idea of the high efficiency of the automatic GOLD optimisation process compared to standard man-driven optimisation techniques.

### Damping optimisation on vehide body panels

A real vehicle application example of GOLD is a damping optimisation performed on an upper class limousine car body. On this vehide model a multi-objective damping treatment optimisation was performed in order to improve the vibration behaviour on the front floor while reducing the damping treatment mass by at least 30% with respect to the original damping package.

Calculations on the whole car body and on the floor, using a substructuring technique to model the remaining car body parts, were performed. In this way, more realistic boundary conditions can be applied to the panels (modal constraints at the nodes). In this particular test application a vertical unit displacement excitation was used.

Firstly, the FE model of the panels without any damping treatment was validated against a set of measurements and the general good correspondence of the simulated panel vibration responses with the measured ones was positively verified. After this initial validation step, a FE calculation with the original damping treatment of the vehicle was performed and the MSV response extracted and used as the reference case which the optimisation had to improve.

The damping areas (areas which were possible candidates to apply damping treatment) were divided into 17 potential damping patches. During the optimisation, each patch is allowed either to stay bare or to carry one out of seven possible different damping treatments (different materials and thicknesses).

The metal sheet thicknesses of the floor panels were given and different temperature areas for the dash, tunnel, front and rear floor regions were taken into consideration, In general, damping materials are strongly temperature dependent, thus the same treatment laying over panel areas with different temperatures has different mechanical properties: this behaviour is correctly taken into account by GOLD. In fact, it is possible to consider the same patch physically consisting of several sections having different thickness and/or temperature.

A set of different input material properties for GOLD were created per each allowed configuration of:
- metal sheet thickness
- damping thickness
- damping material
- temperature

The optimisation domain given by the 8 possible treatment configurations with 17 patches is made by 8¹⁷ ≈ 2.25 · 10¹⁵ possible solutions of the optimisation problem. Of course, this figure includes all authorised configurations for the optimisation , some of which can be unrealistic, like for example "all 17 patches bare" or "all patches treated with the highest treatment thickness".

In order to reach a good convergence of the optimisation in reasonable calculation time, the Micro Genetic Algorithm was applied first on a reduced population of five individuals with a high number of possible generations allowed. After the 67^{th} generation a flattening of the slope of the Objective Function versus the number of performed generations was remarked, so the Micro Algorithm was stopped at that generation, after about 30 minutes. The population of individuals obtained with these steps was used as input to the Standard Genetic Algorithm, which was run with a population of 60 individuals and 120 generations.

After the GOLD run, the best solutions according to the optimisation criteria were listed and the optimised solution could be extracted. That solution consists of seven treated patches (out of the 17 possible candidates). Significant improvements of the MSV average and peak levels were achieved, together with 33% weight reduction of the floor damping treatment with respect to the original treatment. When comparing the initial and optimised MSV curves, three frequency domains with different efficiency of the damping treatment can be identified:
- below 100Hz, no local panel modes exist, so there is in practice no vibration reduction / damping effect of the treatment and thus there can be no improvement anyhow due to damping application
- between 100Hz and 175Hz a moderate effect due to damping is visible
- above 175Hz, important improvements are achieved, especially near the mode peaks (up to 5 and more dB)

With the described strategy, a huge optimisation space of 8¹⁷ possibilities could be efficiently explored performing 173 Nastran® runs: this meant in total 33 hours of elapsed calculation time on a standard Unix workstation. The gains in the number of explored solutions and calculation time are enormous with respect to standard DOE techniques. In order to verify the prediction, together with the above GOLD optimisation, also an experimental optimisation of the damping package was performed by the Diamonds methodology on the real vehicle. The experimental optimisation process led to select the same damping material on the same vehicle panels with almost the same topological distribution of the treatment. However, a prototype of the vehide is needed to carry out the hybrid experimental-numerial Diamonds optimisation, while GOLD is a purely numerical procedure, which can be applied before any prototye has been made available.

The advantages of present invention are obvious for the man skilled in the art. GOLD is a new optimisation tool developed by applicant, based on a genetic algorithms and able to efficiently predict the optimum damping package on vehide body panels in terms of materials, thickness and local damping distribution. GOLD allows the efficient exploration of very large solution domains and has the possibility of taking into account high numbers of variables, even in full vehicle computations (metal sheet and damping treatment type, thickness, temperature and distribution). It has been successfully tested in different test cases, from simple plates to full vehide applications. With its wide choice of algorithms and customisation functionality, it allows the definition of a wide range of optimisation strategies, according to the specific user needs (weight reduction, vibration reduction, improvement of the acoustics, improvement for a specific frequency range, etc.). The GOLD has an open architecture, which makes it easy to modify and link to any simulation methodology. It is compatible, for instance, with all MSC Nastran® features, in particular sub-structuring techniques (superelements) and modal superposition calculations.

GOLD helps the achievement of the optimum in the design of vehide damping packages by means of FE simulation. It is based on generic algorithms, which are recognised as the most powerful methodology to handle complex optimisation problems with a very large number of variables (possibly discontinuous). The optimisation is performed in a cascade of successive iterations. In each iteration a set of solutions is explored and the best are selected on the basis of certain given constraints: lower vibration, lighter weight, lower SPL. Each time a new iteration is performed, the population evolves for the better the best solutions are kept in the selection process and can generate new solutions, while the worst are discarded and replaced with the new ones. The whole iteration and generation process is automatically performed and controlled by special operators embedded in the GOLD software, which is written in MatLab® software package.

The user is free to customise the damping package optimisation by directly pre-setting the optimisation constraints with simple interface commands. The user also has the possibility of monitoring the optimisation process on a visual control panel, where the state of the optimisation flow is shown in real time, iteration by iteration. One of the main features of GOLD is that the number of input variables can be very high. The user can take into account many different materials, distributions and thicknesses of metal and damping, as well as different temperature areas in the damping package.

## Claims

1. Optimising method for vibration damping treatments of vehicle body panels **characterised by** the following input steps to create input variables:
- generating a structural finite element (FE) model of the vehide body respectively the panel(s) (dash, floor, tunnel) on which damping has to be optimised and/or generating a boundary element (BE) model of the passenger compartment (in case that an acoustic target/SPL is required);
- defining damping patches potentially subject to possible treatment;
- defining a plurality (N) of possible damping treatments (induding no treatment) and determining its material parameters / characteristic data as well as the body panel material parameters / characteristic data;
- if required, defining more additional constraints or objectives in terms of weight and noise vibration harsh (NVH) performance (vibration and acoustic pressure);
- and further comprising the following computing steps:
- computing the equivalent material damping parameters / properties (m) (i.e. overall thickness, weight, porosity, bending-stiffness, elongation stiffness, bending loss factor, elongation loss factor, visco-elasticity, temperature, etc.) by multi-layer simulation (for instance by EMERALD®) from these material parameters for each combination of any of the plurality of the possible damping treatments with any of the vehide body panel parameters, including the temperature and frequency dependency of all materials involved;
- running a FEM simulation (i.e. a finite element model simulation, such as NASTRAN® for a reference configuration in order to calculate the dynamic response (NVH response transfer function), in particular the vibration behaviour of the vehicle on which damping has to be optimised with respect to exitation, architecture/structure and used materials;
- applying a genetic algorithm to the above input variables, which algorithm performs a selective iteration by:
- a) generating a pool of individuals (damping packages/treatment configuration, coded by a binary string) from the input variables (equivalent material damping properties, spatial distribution, thickness, weight, etc. of the binary string);
- b) mutating (bit change for an individual)and/or crossing (exchange of bit sequences) randomly selected individuals/genes of this pool by means of genetic statistic operators to generate a new generation of individuals/genes;
- c) selecting each individual of the new generation by means of a statistical selection according to a defined objective function (OF), i.e. calculating the value of a predetermined fitness/priority criterium/predefined targets (lower weight, lower vibration, lower sound pressure level, lower cost, etc./objective function);
- d) correlating individual's chance of mutating and/or crossing with their performance with respect to the objective function;
- e) mutating and/or crossing these chance-correlated individuals by means of genetic statistic operators to generate a next new generation of individuals;
- f) iterating steps c), d) and e) until a predetermined flattening of the slope of the OF versus the number of performed generations is achieved, which leads to a set of optimised vibration damping configurations.
